# EUROPEAN PATENT APPLICATION

(11) **EP 1 689 122 A2**
(43) Date of publication of application: **09.08.2006**
(21) Application number: 06090017.2
(22) Date of filing: 01.02.2006
(51) Int. Cl.: H04L 12/24

(54) **System, method and program for movement management of a mobile node**

(30) Priority: 02.02.2005 JP 2005025792
(71) Applicant: NEC Corporation, Tokyo 108-01 (JP)
(72) Inventor: Watanabe, Yoshikazu, Minato-ku Tokyo (JP); Mizukoshi, Yasuhiro, Minato-ku Tokyo (JP)
(74) Representative: Wenzel & Kalkoff

(57) **Abstract**

There is provided a movement management system which can continue the communication even if a mobile node moves to a network where a device which imposes restrictions on communication exists. The movement management server establishes a session with a mobile node, manages information on association of a fixed ID of the mobile node with the established session, and mediates communication using fixed IDs of respective nodes between a mobile node and a communication partner node. Therefore, the movement management server comprises a session transmitting and receiving portion which communicates by establishing a session between with the mobile node, a network transmitting and receiving portion which communicates with the communication partner node, and a management processing portion which manages information on the mobile node, and performs transfer processing of a packet. The movement management server manages a path management table holding information on association of a fixed ID of the mobile node with a session, and a session management table holding information on the session itself.

## Description

### BACKGROUND OF THE INVENTION

### Field of the Invention

The present invention relates to a movement management system, a movement management server, and a movement management method used for them, and a program thereof, and in particular, to a movement management method for a communication terminal connected to a network to communicate in a movement destination.

### Description of the Prior Art

A communication terminal connected to a network is identified by a node ID (identification information). In many communication protocols, since a node ID is determined depending on a connection place to a network, when a connection place of a communication terminal to a network changes, it is necessary to also change the node ID according to it. Therefore, there is a problem that it is not possible to move with continuing communication with a communication partner since the node ID is changed even if a mobile communication terminal tries to communicate by changing the network to a new one to be connected.

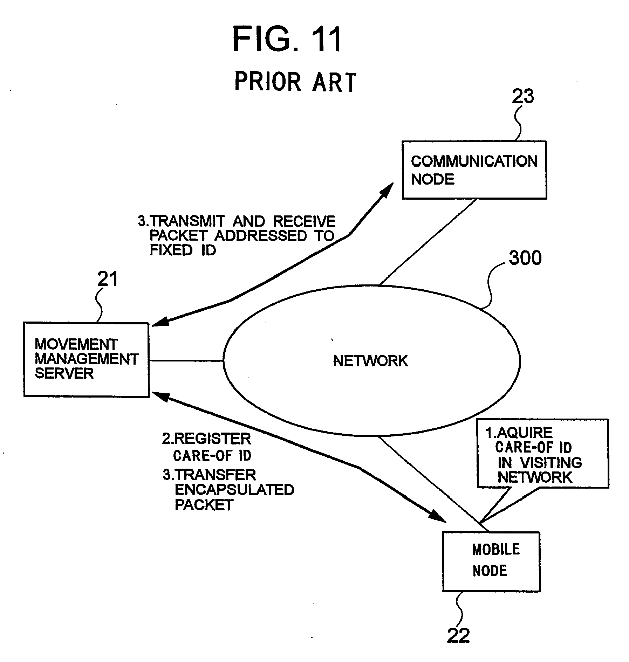

As conventional technology for achieving the movement of a communication terminal with continuing communication, there is a method of installing a server (movement management server) holding association of a fixed node ID (fixed ID), which is not changed even if a communication terminal moves, with an attention node ID (care-of ID) which can be used in a visited network (Refer to FIG. 11) (for example, refer to Japanese Patent Laid-Open No. 2002-199004).

The fixed ID is an ID assigned to a mobile node 22 fixedly, and does not change even when a connection place to a network 300 is changed. When communicating with another communication node 23, the mobile node uses this fixed ID.

Nevertheless, when being connected to the network 300 in a movement destination, the mobile node 22 cannot perform direct communication using this fixed ID. The care-of ID is a node ID acquired in the network 300 in the movement destination to which the mobile node 22 is connected, and changes as the connection place to the network 300 changes (refer to 1. in FIG. 11).

The mobile node 22 registers a care-of ID into a movement management server 21 each time the care-of ID changes with movement (refer to 2. in FIG. 11). The movement management server 21 holds the association information of a fixed ID with a care-of ID on the basis of registration from the mobile node 22, and further act as a proxy on receipt of a packet transmitted to a fixed ID.

When the communication node 23 transmits a packet to a fixed ID, the movement management server 21 receives the packet. The movement management server 21 looks into a care-of ID corresponding to the fixed ID of the packet which is received, encapsulates the packet into a packet addressed to the care-of ID, and transmits it to the mobile node 22 (refer to 3. in FIG. 11).

Communication using a fixed ID becomes possible by the mobile node 22 taking out the packet addressed to the fixed ID from the encapsulated packet which is received from the movement management server 21.

In this manner, although it is possible to continue communication using a fixed ID with the mobile node 22 moving by installing the movement management server 21, in the case of this system, complete communication reachability between the movement management server 21 and the network 300 to which the mobile node 22 is connected is required.

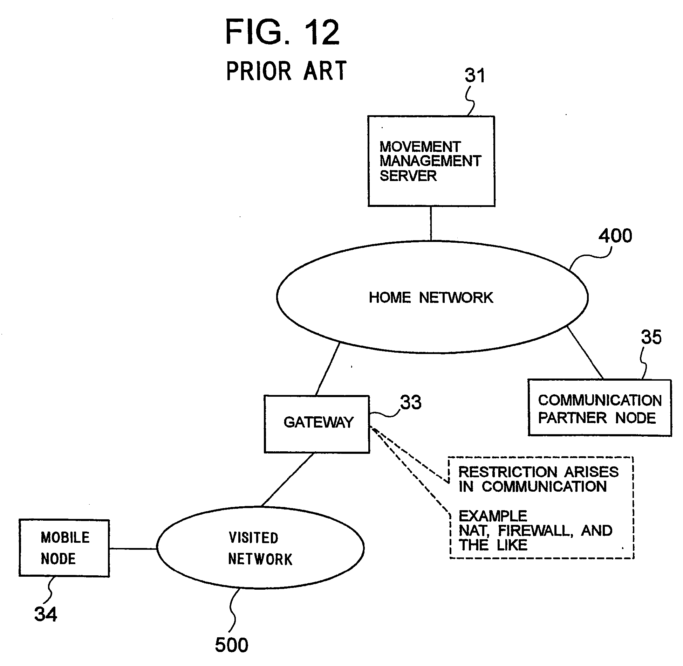

Nevertheless, a location (gateway) where communication is extremely restricted in a communication network exists in the communication network in recent years in many cases. FIG. 12 shows the construction of such a network. A home network 400 in FIG. 12 is a whole network where complete reachability with a movement management server 31 is available. When a mobile node 34 moves within this home network 400, it becomes possible to continuously communicate using a fixed ID by using the above-mentioned existing technology.

On the other hand, a visited network 500 is a visited network connected to the home network 400 through a gateway 33 where some communication restrictions are imposed. As examples of the home network 400 and the visited network 500 which is a movement destination, there are the Internet as the home network 400, and a private IP (Internet Protocol) network connected to the Internet via a NAT (Network Address Translation) router or a network protected by a firewall as the visited network 500 which is a movement destination. In this case, the NAT router or the firewall device serves as the gateway 33.

In the conventional movement management server mentioned above, there is a problem in that it becomes impossible to continue communication since it becomes impossible to perform registration to a movement management server and to transmit and receive an encapsulated packet when a mobile node is connected to a visited network connected to the home network via a gateway.

For example, when a NAT router exists as a gateway between a movement management server and a mobile node, a mobile node registers a private node ID valid only in a visited network as a care-of ID into the movement management server. Nevertheless, even if the movement management server tries to encapsulate a packet addressed to the fixed ID and to transmit it to the care-of ID, it is impossible to send the packet since it is impossible to reach the private node ID from the movement management server in the home network.

In addition, when a firewall device exists as a gateway between the movement management server and mobile node, a registration packet of the mobile node to the movement management server itself is revoked by the firewall, and hence, it is not possible to perform registration to the movement management server.

Since there are visited networks where restrictions are imposed on communication between movement management servers, which are mentioned above, in actual networks, conventional technology has a problem in that it becomes impossible to continue communication when a mobile node moves to such a network.

Then, the present invention aims at providing a movement management system and a movement management server which can dissolve the above-mentioned problems, and can continue communication even when a mobile node moves to a network where a device which imposes restrictions on communication exists, and a movement management method and its program which are used for them.

### BRIEF SUMMARY OF THE INVENTION

A movement management system according to the present invention is a movement management system which manages a communication terminal by a movement management server in a communication network where node Identification information of the communication terminal is determined depending on a connection place to the network, wherein the movement management server has means of establishing a virtual communication path through which the communication terminal and movement management server can mutually transmit and receive data from a network in a movement destination of the communication terminal.

A movement management server according to the present invention is a movement management server which manages a communication terminal in a communication network where node Identification information of the communication terminal is determined depending on a connection place to the network, comprising:
means of establishing a virtual communication path through which the communication terminal and the movement management server can mutually transmit and receive data from a network in a movement destination of the communication terminal.

A movement management method according to the present invention is a movement management method used in a movement management system which manages a communication terminal by a movement management server in a communication network where node identification information of the communication terminal is determined depending on a connection place to the network, wherein the movement management server executes processing of establishing a virtual communication path through which the communication terminal and movement management server can mutually transmit and receive data from a network in a movement destination of the communication terminal.

A program of the movement management method according to the present invention is a program of a movement management method used in a movement management system which manages a communication terminal by a movement management server in a communication network where node Identification information of the communication terminal is determined depending on a connection place to the network, wherein the program makes a computer of the movement management server execute processing of establishing a virtual communication path through which the communication terminal and movement management server can mutually transmit and receive data from a network in a movement destination of the communication terminal.

That is, the movement management system according to the present invention provides the construction of being able to continue communication with another terminal using a fixed ID even when the communication terminal moves to a network through a gateway, in a communication network where a node ID (identification information) of the communication terminal is determined depending on a connection place to the network.

Explaining this more specifically, the movement management system according to the present invention establishes a virtual communication path (hereafter, this is called a session) where a mobile node which moves can mutually transmit and receive data between with the movement management server from a visited network. The movement management server associates a fixed ID of the mobile node with the established session between with the mobile node, holds the information, and mediates communication using the fixed ID between the mobile node and a communication partner node.

Hence, in the movement management system according to the present invention, even if a node ID changes with the movement of a mobile node, it is possible to continue communication using the fixed ID of the mobile node by using a session with a movement management server.

In addition, in the movement management system according to the present invention, even if a device which imposes restrictions on communication exists in a network between a movement management server and a mobile node, it is possible for the mobile node to utilize the movement management server so long as it is possible to establish a session.

Hence, in the movement management system according to the present invention, since the movement management server sends a packet, addressed to the fixed ID, to the mobile node through the session between the movement management server and mobile node, it is possible to continue the communication using the same fixed ID even if the mobile node moves.

### BRIEF DESCRIPTION OF THE DRAWINGS

FIG. 1 is a block diagram showing the construction of a movement management system according to an embodiment of the present invention;
FIG. 2 is a block diagram showing the construction of a movement management server according to a first example of the present invention;
FIG. 3 is a sequence chart showing the operation of the movement management system according to the first example of the present invention;
FIG. 4 is a block diagram showing the construction of a movement management server according to a second example of the present invention;
FIG. 5 is a sequence chart showing the operation of the movement management system according to the second example of the present invention;
FIG. 6 is a block diagram showing the construction of a movement management server according to a third example of the present invention;
FIG. 7 is a sequence chart showing the operation of the movement management system according to the third example of the present invention;
FIG. 8 is a sequence chart showing the operation of a movement management system according to a fourth example of the present invention;
FIG. 9 is a block diagram showing the construction of a movement management server according to a fifth example of the present invention;
FIG. 10 is a sequence chart showing the operation of the movement management system according to the fifth example of the present invention;
FIG. 11 is a block diagram showing the construction of a movement management system according to a conventional example; and
FIG. 12 is a block diagram showing another construction example of a movement management system according to a conventional example.

### DETAILED DESCRIPTION OF THE PREFERRED EMBODIMENTS

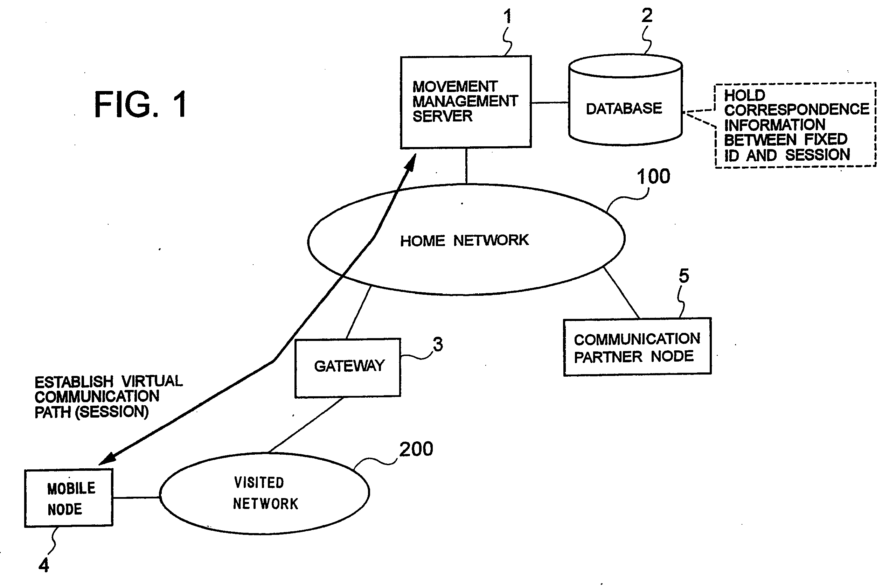

Next, an embodiment of the present invention will be described with reference to the drawings. FIG. 1 is a block diagram showing the construction of a movement management system according to an embodiment of the present invention. In FIG. 1, the movement management system according to this embodiment of the present invention is constructed of a movement management server 1 equipped with a database 2, a gateway 3, a movable mobile node 4, a communication partner node 5, a home network 100, and a visited network 200.

The mobile node 4 establishes a virtual communication path (hereafter, this is called a session) where data can mutually be transmitted and received with the movement management server 1 from the visited network 200. The movement management server 1 associates a fixed ID (identification information) of the mobile node 4 with the established session with the mobile node 4, holds the information in the database 2, and mediates communication between the mobile node 4 and communication partner node 5 using respective fixed IDs of the mobile node 4 and communication partner node 5.

Hence, even if a node ID changes with movement to the visited network 200, it is possible for the mobile node 4 to continue communication using respective fixed IDs of the mobile node 4 and communication partner node 5 by using a session with a movement management server 1. In addition, even if a device (gateway 3) which imposes restrictions on communication exists in a network between the movement management server 1 and mobile node 4, it is possible for the mobile node 4 to utilize the movement management server 1 so long as it is possible to establish a session between the mobile node 4 and movement management server 1.

Thus, in the embodiment of the present invention, since the movement management server 1 sends a packet, addressed to the fixed ID, to the mobile node 4 through the session between the movement management server 1 and mobile node 4, the mobile node 4 can continue the communication using the same fixed ID even if it moves.

In addition, in the embodiment of the present invention, even if a device (gateway 3) which imposes restrictions on communication exists in a network between the movement management server 1 and mobile node 4, the mobile node 4 can continue communication with another device through the movement management server 1 so long as it is possible to establish a session between the mobile node 4 and movement management server 1.

### Example 1

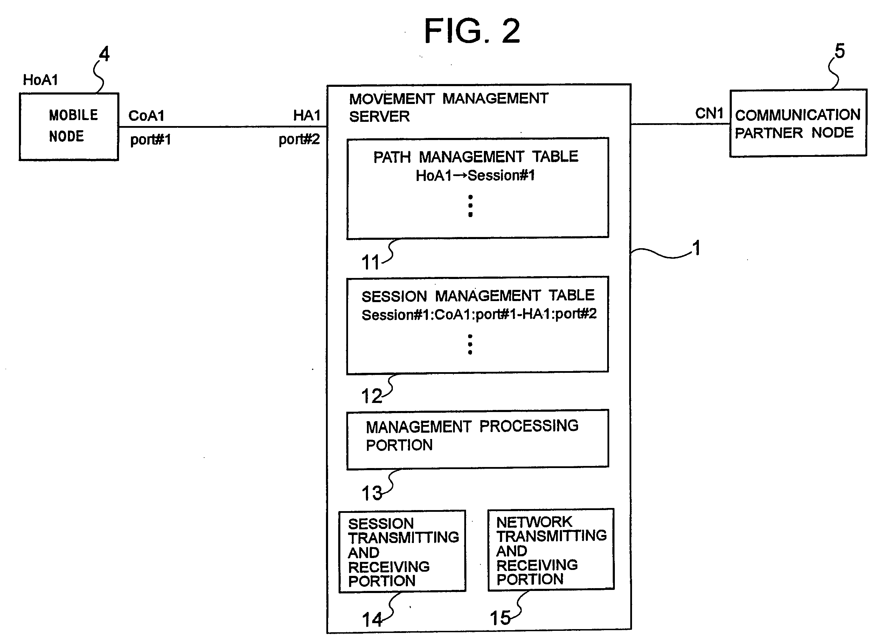

FIG. 2 is a block diagram showing the construction of a movement management server according to a first example of the present invention. The movement management system according to the first example of the present invention has the same construction as the movement management system according to the embodiment of the present invention shown in FIG. 1. Nevertheless, in FIG. 2, only the movement management server 1, mobile node 4, and communication partner node 5 are shown, and the home network 100, visited network 200, and gateway 3 are omitted from the illustration.

The mobile node 4 is a communication terminal which performs the communication using a session by establishing the session which enables the mobile node 4 to mutually transmit and receive data with the movement management servers 1. The communication partner node 5 is a communication terminal which communicates with the mobile node 4.

The movement management server 1 is a server which establishes a session with the mobile node 4, manages information on association of the fixed ID of the mobile node 4 with the established session, and mediates communication using fixed IDs of respective nodes between the mobile node 4 and communication partner node 5.

The movement management server 1 comprises a session transmitting and receiving portion 14 which communicates by establishing a session with the mobile node 4, a network transmitting and receiving portion 15 which communicates with the communication partner node 5, and a management processing portion 13 which manages information on the mobile node 4, and performs the transfer processing of a packet.

In addition, the movement management server 1 manages a path management table 11 holding association information ("HoA1 -> Session#1," ...) on fixed IDs of mobile nodes 4, and sessions, and a session management table 12 holding information ("Session#1:CoA1:port#1-HA1:port#2," ...) on the sessions themselves.

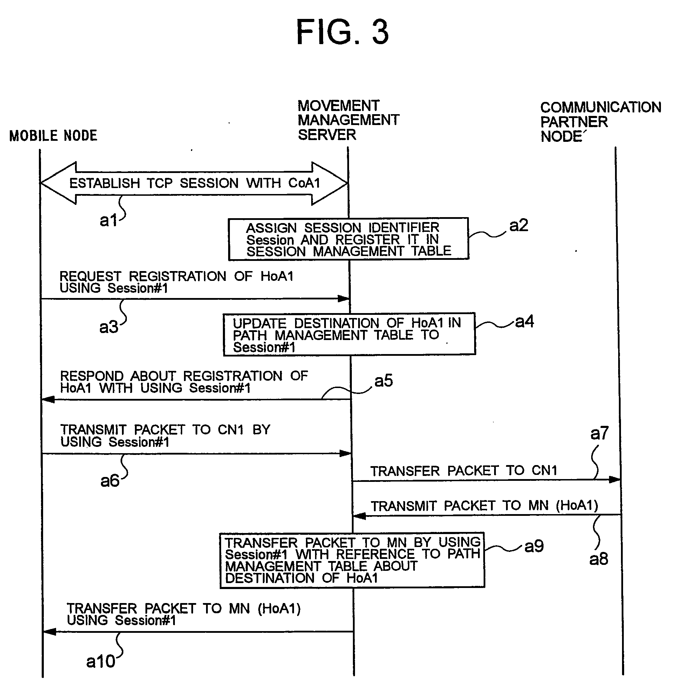

FIG. 3 is a sequence chart showing the operation of the movement management system according to the first example of the present invention. With reference to these FIGS. 2 and 3, the operation of the movement management system according to the first example of the present invention will be explained. In addition, in this example, it is assumed that a TCP (Transmission Control Protocol) session is used as a session between the mobile node 4 and movement management server 1. In addition, the processing of the movement management server 1 in FIG. 3 is achieved because a CPU (Central Processing Unit) which constructs the management processing portion 13 and is not shown executes the program stored in the main memory (not shown) of the movement management server 1.

First, the operation at the time when the mobile node 4 moves will be explained. When connecting to a network (visited network 200 in FIG. 2) and acquires a node ID (care-of ID "CoA1"), mobile node 4 performs a TCP connection request to the movement management server 1.

The node ID of the TCP session in a side of the mobile node 4 at this time is "CoA1" and a TCP port number is "port#1", and a node ID in a side of the movement management server 1 is "HA1" and a TCP port number is "port#2."

The TCP connection request of the mobile node 4 is received by the session transmitting and receiving portion 14 of the movement management server 1, and the establishment processing of the TCP session is performed (a1 in FIG. 3). At this time, the management processing portion 13 of the movement management server 1 assigns a session identifier (Session#1) to the established TCP session, and stores the information in the session management table 12 (a2 in FIG. 3).

When the TCP session is established between the mobile node 4 and movement management server 1, the mobile node 4 perform a registration request of the fixed ID "HoA1" using the TCP session ("Session#1") (a3 in FIG. 3).

The registration request of the mobile node 4 is received by the management processing portion 13 of the movement management server 1 through the session transmitting and receiving portion 14, and the management processing portion 13 stores the fixed ID of the mobile node 4, and the session identifier (Session#1) of the TCP session in the path management table 11 (a4 in FIG. 3). Then, the management processing portion 13 transmits a registration response to the mobile node 4 using "Session#1" (a5 in FIG. 3).

Next, operation at the time of performing transmission to the communication partner node 5 from the mobile node 4 will be explained. The mobile node 4 transmits a packet addressed to the communication partner node 5 (transmission destination ID "CN1", and sender ID "HoA1") to the movement management server 1 using "Session#1" (a6 in FIG. 3).

The packet addressed to the communication partner node 5 is received by the management processing portion 13 of the movement management server 1 through the session transmitting and receiving portion 14, and is transferred toward the communication partner node 5 using the network transmitting and receiving portion 15 (a7 in FIG. 3).

Furthermore, operation at the time of performing transmission to the mobile node 4 from the communication partner node 5 will be explained. The packet (transmission destination ID "HoA1", and sender ID "CN1") sent to the mobile node 4 from the communication partner node 5 is received by the management processing portion 13 of the movement management server 1 through the network transmitting and receiving portion 15 (a8 in FIG. 3).

On the basis of the transmission destination ID "HoA1" of the packet which is received, the management processing portion 13 retrieves a session identifier in the path management table 11. At this time, if not being able to find a session corresponding to the transmission destination ID of the packet, the management processing portion 13 revokes the packet.

If being able to find the session corresponding to the transmission destination ID of the packet, the management processing portion 13 transfers the packet to the mobile node 4 through the session "Session#1" corresponding to the transmission destination ID "HoA1" of the packet through the session transmitting and receiving portion 14 (a9 and a10 in FIG. 3).

Thus, in this example, since the movement management server 1 sends a packet, addressed to a fixed ID, to the mobile node 4 through a session between the movement management server 1 and mobile node 4, the mobile node 4 can continue communication using the same fixed ID even if it moves.

In addition, in this example, even if a device (gateway 3) which imposes restrictions on communication exists in a network between the movement management server 1 and mobile node 4, the mobile node 4 can continue communication through the movement management server 1 so long as it is possible to establish a session.

### Example 2

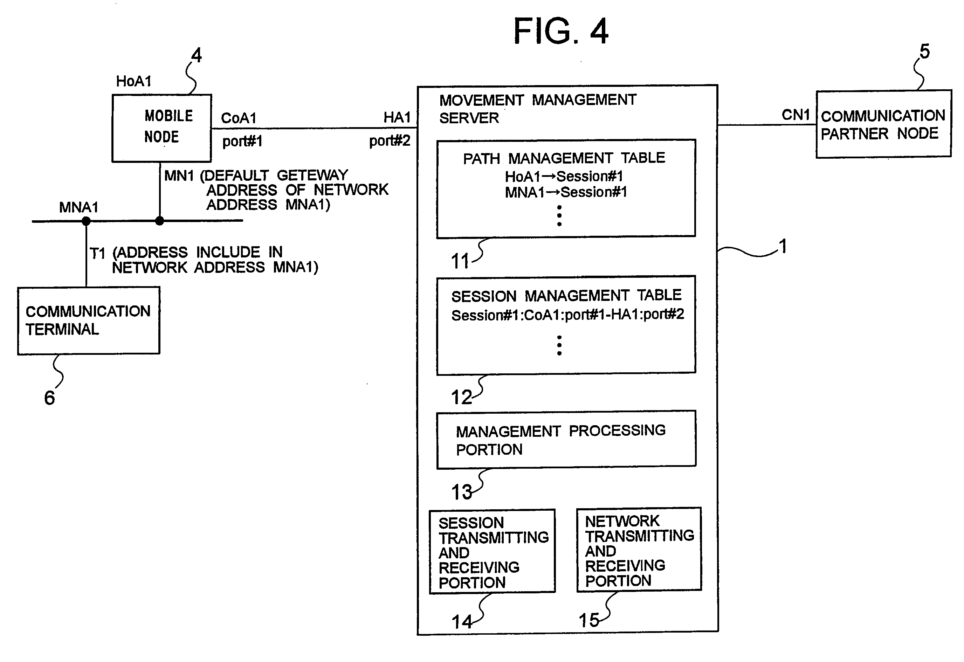

FIG. 4 is a block diagram showing the construction of a movement management server according to a second example of the present invention. A movement management system according to the second example of the present invention has the same construction as the movement management system according to the embodiment of the present invention shown in FIG. 1 except the addition of a network (MNA1) which moves with the mobile node 4, and a communication terminal 6 connected to the network (MNA1) except the mobile node.

In FIG. 4, only the movement management server 1, mobile node 4, communication partner node 5, network (MNA1), and communication terminal 6 are shown, and the home network 100, visited network 200, and gateway 3 are omitted from illustration. In addition, a node ID "MN1" of the mobile node 4 in a side of MNA is set to the communication terminal 6, which moves with the mobile node 4, as a default route.

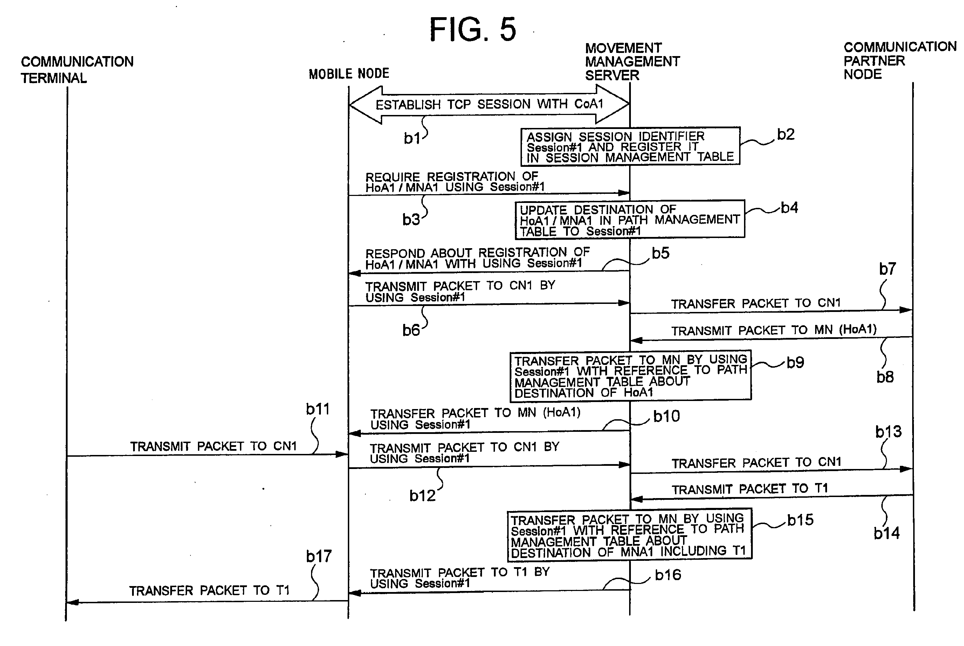

FIG. 5 is a sequence chart showing the operation of the movement management system according to the second example of the present invention. With reference to these FIGS. 4 and 5, the operation of the movement management system according to the second example of the present invention will be explained. In addition, in this example, it is assumed that the TCP session is used as a session between the mobile node 4 and movement management server 1. In addition, the processing of the movement management server 1 in FIG. 5 is achieved because a CPU which constructs the management processing portion 13 and is not shown executes a program stored in the main memory (not shown) of the movement management server 1.

The operation of the movement management system according to the second example of the present invention is almost the same as the operation of the movement management system according to the first example of the present invention mentioned above. However, in the case of the second example of the present invention, it is necessary to make the movement management server 1 mediate communication which the communication terminal 6 which moves with the mobile node 4 performs. Hence, not only the fixed ID, but also the network (MNA1) which moves with the mobile node 4 are registered at the time of a fixed ID registration request performed after TCP session activation. As a result, association to "Session#1" from "MNA1" is also recorded in the path management table 11 of the movement management server 1 as well as association to "Session#1" from "HoA1."

First, operation at the time when the mobile node 4 moves will be explained. When connecting to a network (visited network 200 in FIG. 1) and acquiring a node ID (care-of ID "CoA1"), the mobile node 4 performs a TCP connection request to the movement management server 1.

The node ID of the TCP session in a side of the mobile node 4 at this time is "CoA1" and a TCP port number is "port#1", and a node ID in a side of the movement management server 1 is "HA1" and a TCP port number is "port#2."

The TCP connection request of the mobile node 4 is received by the session transmitting and receiving portion 14 of the movement management server 1, and the establishment processing of the TCP session is performed (b1 in FIG. 5). At this time, the management processing portion 13 of the movement management server 1 assigns a session identifier (Session#1) to the established TCP session, and stores the information in the session management table 12 (b2 in FIG. 5).

When the TCP session is established between the mobile node 4 and movement management server 1, the mobile node 4 performs a registration request of the fixed ID "HoA1" and network (MNA1) using the TCP session ("Session#1") (b3 in FIG. 5).

The registration request of the mobile node 4 is received by the management processing portion 13 of the movement management server 1 through the session transmitting and receiving portion 14, and the management processing portion 13 stores the fixed ID of the mobile node 4, and the session identifier (Session#1) of the TCP session in the path management table 11 (b4 in FIG. 5). Then, the management processing portion 13 transmits a registration response to the mobile node 4 using "Session#1" (b5 in FIG. 5).

Next, operation at the time of performing transmission to the communication partner node 5 from the mobile node 4 will be explained. The mobile node 4 transmits a packet addressed to the communication partner node 5 (transmission destination ID "CN1", and sender ID "HoA1") to the movement management server 1 using "Session#1" (b6 in FIG. 5).

The packet addressed to the communication partner node 5 is received by the management processing portion 13 of the movement management server 1 through the session transmitting and receiving portion 14, and is transferred toward the communication partner node 5 using the network transmitting and receiving portion 15 (b7 in FIG. 5).

Furthermore, operation at the time of performing transmission to the mobile node 4 from the communication partner node 5 will be explained. The packet (transmission destination ID "HoA1", and sender ID "CN1") sent to the mobile node 4 from the communication partner node 5 is received by the management processing portion 13 of the movement management server 1 through the network transmitting and receiving portion 15 (b8 in FIG. 5).

On the basis of the transmission destination ID "HoA1" of the packet which is received, the management processing portion 13 retrieves a session identifier in the path management table 11. At this time, if not being able to find a session corresponding to the transmission destination ID of the packet, the management processing portion 13 revokes the packet.

If being able to find the session corresponding to the transmission destination ID of the packet, the management processing portion 13 transfers the packet to the mobile node 4 through the session "Session#1" corresponding to the transmission destination ID "HoA1" of the packet through the session transmitting and receiving portion 14 (b9 and b10 in FIG. 5).

Furthermore, operation at the time of performing transmission to the communication partner node 5 from the communication terminal 6 will be explained. The packet (transmission destination ID "CN1", and sender ID "T1") sent to the communication partner node 5 from the communication terminal 6 is transferred to the mobile node 4 according to the setting of the default route (b11 in FIG. 5).

The packet received by the mobile node 4 is transferred to the movement management server 1 through "Session#1" similarly to the time of the mobile node 4 transmitting a packet (b12 FIG. 5), and is transferred to the communication partner node 5 from the movement management server 1 after that (b13 in FIG. 5).

Furthermore, operation at the time of performing transmission to the communication terminal 6 from the communication partner node 5 will be explained. The packet (transmission destination ID "T1", and sender ID "CN1") sent to the communication terminal 6 from the communication partner node 5 is received by the management processing portion 13 of the movement management server 1 through the network transmitting and receiving portion 15 (b14 in FIG. 5).

The management processing portion 13 obtains the identifier "MNA1" of the network where the transmission destination ID "T1" of the packet which is received is included, and retrieves the session identifier in the path management table 11 on the basis of the identifier. At this time, if not being able to find a corresponding session, the management processing portion 13 revokes the packet.

On the other hand, if being able to find the corresponding session, the management processing portion 13 transfers the packet to the mobile node 4 through the session "Session#1" corresponding to the transmission destination ID "HoA1" of the packet through the session transmitting and receiving portion 14 (b15 and b16 in FIG. 5). The mobile node 4 transfers the packet to the communication terminal 6 (b17 in FIG. 5).

Thus, in this example, since the movement management server 1 sends a packet, addressed to a fixed ID, to the communication terminal 6 through a session between the movement management server 1 and mobile node 4, and the mobile node 4, it is possible to continue communication using the same fixed ID even if the communication terminal 6 moves with the mobile node 4.

In addition, in this example, even if a device (gateway 3) which imposes restrictions on communication exists in a network between the movement management server 1 and mobile node 4, the communication terminal 6 which moves with the mobile node 4 can continue communication through the movement management server 1 so long as it is possible to establish a session.

### Example 3

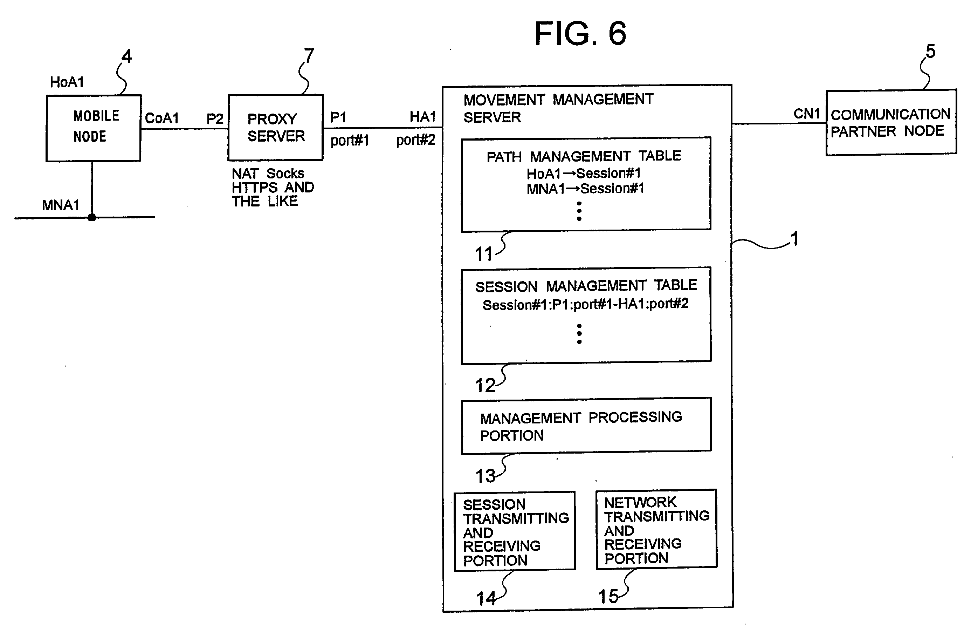

FIG. 6 is a block diagram showing the construction of a movement management server according to a third example of the present invention. A movement management system according to the third example of the present invention has the same construction as the movement management system according to the embodiment of the present invention shown in FIG. 1 except the addition of a network (MNA1) which moves with the mobile node 4, and the installation of a proxy server 7 instead of the gateway 3.

In FIG. 6, only the movement management server 1, mobile node 4, communication partner node 5, network (MNA1), and proxy server 7 are shown, and the home network 100, and visited network 200 are omitted from illustration.

The proxy server 7 is a device which exists in a network between the mobile node 4 and movement management server 1, and imposes restrictions on or relays communication between both. Specifically, what are mentioned as the proxy server 7 are a NAT (Network Address Translation) router, a Socks server, an HTTP (Hyper Text Transfer Protocol) proxy, an HTTPS [Hyper Text Transfer Protocol over SSL (Secure Sockets Laver)] proxy, and the like.

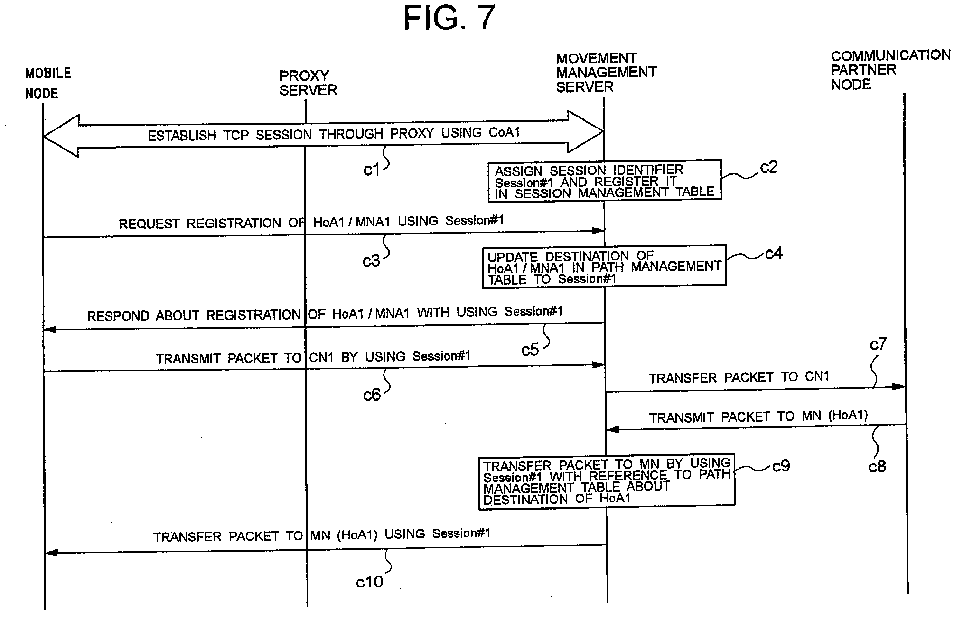

FIG. 7 is a sequence chart showing the operation of the movement management system according to the third example of the present invention. With reference to these FIGS. 6 and 7, the operation of the movement management system according to the third example of the present invention will be explained. In addition, in this example, it is assumed that the TCP session is used as a session between the mobile node 4 and movement management server 1. Moreover, the processing of the movement management server 1 in FIG. 7 is achieved because a CPU which constructs the management processing portion 13 and is not shown executes the program stored in the main memory (not shown) of the movement management server 1.

However, the difference between this example and the second example of the present invention is that a TCP session between the mobile node 4 and the movement management server 1 is not directly established, but is relayed by the proxy server 7. Therefore, since not a node ID of the mobile node 4 but a node ID (P1) of the proxy server 7 is registered into the session management table 12 of the movement management server 1, information stored in the session management table 12 is "Session#1:P1:port#1-HA1:port#2."

First, operation at the time when the mobile node 4 moves will be explained. When connecting to a network (visited network 200 in FIG. 1) and acquires a node ID (care-of ID "CoA1"), the mobile node 4 performs a TCP connection request to the movement management server 1.

The node ID of the TCP session in a side of the mobile node 4 at this time is "CoA1" and a TCP port number is "port#1", and a node ID in a side of the movement management server 1 is "HA1" and a TCP port number is "port#2."

The TCP connection request of the mobile node 4 is received by the session transmitting and receiving portion 14 of the movement management server 1 through the proxy server 7, and the establishment processing of the TCP session is performed (c1 in FIG. 7). At this time, the management processing portion 13 of the movement management server 1 assigns a session identifier (Session#1) to the established TCP session, and stores the information in the session management table 12 (c2 in FIG. 7). Nevertheless, since not a node ID of the mobile node 4 but a node ID (P1) of the proxy server 7 is registered into the session management table 12, information stored in the session management table 12 is "Session#1:P1:port#1-HA1:port#2."

When the TCP session is established between the mobile node 4 and movement management server 1 through the proxy server 7, the mobile node 4 perform a registration request of the fixed ID "HoA1" and the network (MNA1) using the TCP session ("Session#1") (c3 in FIG. 7).

The registration request of the mobile node 4 is received by the management processing portion 13 of the movement management server 1 through the session transmitting and receiving portion 14, and the management processing portion 13 stores the fixed ID of the mobile node 4, and the session identifier (Session#1) of the TCP session in the path management table 11 (c4 in FIG. 7). Then, the management processing portion 13 transmits a registration response to the mobile node 4 using "Session#1" (c5 in FIG. 7).

Next, operation at the time of performing transmission to the communication partner node 5 from the mobile node 4 will be explained. The mobile node 4 transmits a packet addressed to the communication partner node 5 (transmission destination ID "CN1", and sender ID "HoA1") to the movement management server 1 through the proxy server 7 using "Session#1" (c6 in FIG. 7).

The packet addressed to the communication partner node 5 is received by the management processing portion 13 of the movement management server 1 through the session transmitting and receiving portion 14, and is transferred toward the communication partner node 5 using the network transmitting and receiving portion 15 (c7 in FIG. 7).

Furthermore, operation at the time of performing transmission to the mobile node 4 from the communication partner node 5 will be explained. The packet (transmission destination ID "HoA1", and sender ID "CN1") sent to the mobile node 4 from the communication partner node 5 is received by the management processing portion 13 of the movement management server 1 through the network transmitting and receiving portion 15 (c8 in FIG. 7).

On the basis of the transmission destination ID "HoA1" of the packet which is received, the management processing portion 13 retrieves a session identifier in the path management table 11. At this time, if not being able to find a session corresponding to the transmission destination ID of the packet, the management processing portion 13 revokes the packet.

If being able to find the session corresponding to the transmission destination ID of the packet, the management processing portion 13 transfers the packet to the mobile node 4 using the session "Session#1" corresponding to the transmission destination ID "HoA1" of the packet through the proxy server 7 via the session transmitting and receiving portion 14 (c9 and c10 in FIG. 7).

Thus, in this example, since the movement management server 1 sends a packet, addressed to a fixed ID, to the mobile node 4 through a session between the movement management server 1 and mobile node 4 and the proxy server 7, the mobile node 4 can continue the communication using the same fixed ID even if it moves.

In addition, in this example, even if a device (proxy server 7) which imposes restrictions on communication exists in a network between the movement management server 1 and mobile node 4, the mobile node 4 can perform communication through the proxy server 7 and movement management server 1 so long as it is possible to establish a session.

### Example 4

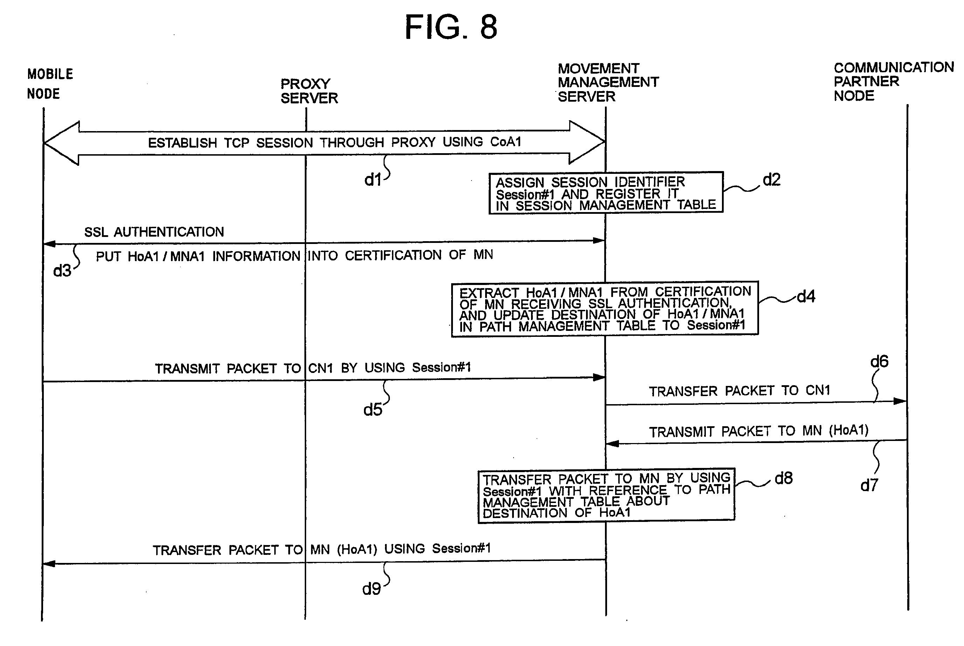

FIG. 8 is a sequence chart showing the operation of a movement management system according to a fourth example of the present invention. Since the movement management system according to the fourth example of the present invention has the same construction as the movement management system according to the third example of the present invention shown in the above-mentioned FIG. 6, the operation of the movement management system according to the fourth example of the present invention will be explained with reference to FIGS. 6 and 8. In addition, in this example, it is assumed that, while using a TCP session as a session between the mobile node 4 and movement management server 1, SSL (Secure Sockets Layer) authentication is used. Furthermore, the processing of the movement management server 1 in FIG. 8 is achieved because a CPU which constructs the management processing portion 13 and is not shown executes a program stored in the main memory (not shown) of the movement management server 1.

However, the difference between this example and the second example of the present invention is that a TCP session between the mobile node 4 and the movement management server 1 is not directly established, but is relayed by the proxy server 7. Therefore, since not a node ID of the mobile node 4 but a node ID (P1) of the proxy server 7 is registered into the session management table 12 of the movement management server 1, information stored in the session management table 12 is "Session#1:P1:port#1-HA1:port#2."

First, the operation at the time when the mobile node 4 moves will be explained. When connecting to a network (visited network 200 in FIG. 2) and acquiring a node ID (care-of ID "CoA1"), the mobile node 4 performs a TCP connection request to the movement management server 1.

The node ID of the TCP session in a side of the mobile node 4 at this time is "CoA1" and a TCP port number is "port#1", and a node ID in a side of the movement management server 1 is "HA1" and a TCP port number is "port#2."

The TCP connection request of the mobile node 4 is received by the session transmitting and receiving portion 14 of the movement management server 1 through the proxy server 7, and the establishment processing of the TCP session is performed (d1 in FIG. 8). At this time, the management processing portion 13 of the movement management server 1 assigns a session identifier (Session#1) to the established TCP session, and stores the information in the session management table 12 (d2 in FIG. 8). Nevertheless, since not a node ID of the mobile node 4 but a node ID (P1) of the proxy server 7 is registered into the session management table 12, information stored in the session management table 12 is "Session#1:P1:port#1-HA1:port#2."

SSL authentication is performed when the TCP session is established through the proxy server 7 between the mobile node 4 and movement management server 1 (d3 in FIG. 8). In this case, the fixed ID "HoA1," reported to the movement management server 1, and the node Identifier "MNA1" are put in the certification of the mobile node 4 transmitted at the time of SSL authentication. The management processing portion 13 of the movement management server 1 takes out the fixed ID "HoA1" and the node Identifier "MNA1" from the received certification, and registers them into the path management table 11 (d4 in FIG. 8).

Next, operation at the time of performing transmission to the communication partner node 5 from the mobile node 4 will be explained. The mobile node 4 transmits a packet addressed to the communication partner node 5 (transmission destination ID "CN1", and sender ID "HoA1") to the movement management server 1 through the proxy server 7 using "Session#1" (d5 in FIG. 8).

The packet addressed to the communication partner node 5 is received by the management processing portion 13 of the movement management server 1 through the session transmitting and receiving portion 14, and is transferred toward the communication partner node 5 using the network transmitting and receiving portion 15 (d6 in FIG. 8).

Furthermore, operation at the time of performing transmission to the mobile node 4 from the communication partner node 5 will be explained. The packet (transmission destination ID "HoA1", and sender ID "CN1") sent to the mobile node 4 from the communication partner node 5 is received by the management processing portion 13 of the movement management server 1 through the network transmitting and receiving portion 15 (d7 in FIG. 8).

On the basis of the transmission destination ID "HoA1" of the packet which is received, the management processing portion 13 retrieves a session identifier in the path management table 11. At this time, if not being able to find a session corresponding to the transmission destination ID of the packet, the management processing portion 13 revokes the packet.

If being able to find the session corresponding to the transmission destination ID of the packet, the management processing portion 13 transfers the packet to the mobile node 4 using the session "Session#1" corresponding to the transmission destination ID "HoA1" of the packet through the proxy server 7 via the session transmitting and receiving portion 14 (d8 and d9 in FIG. 8).

Thus, in this example, since the movement management server 1 sends a packet, addressed to a fixed ID, to the mobile node 4 through a session between the movement management server 1 and mobile node 4 and the proxy server 7, the mobile node 4 can continue the communication using the same fixed ID even if it moves.

In addition, in this example, even if a device (proxy server 7) which imposes restrictions on communication exists in a network between the movement management server 1 and mobile node 4, the mobile node 4 can perform communication through the proxy server 7 and movement management server 1 so long as it is possible to establish a session.

### Example 5

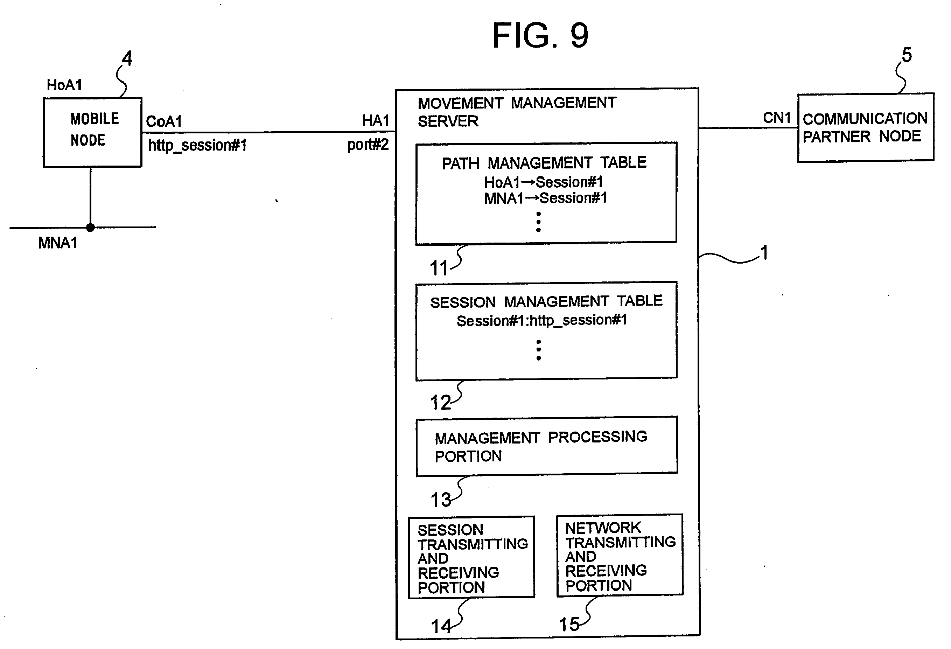

FIG. 9 is a block diagram showing the construction of a movement management server according to a fifth example of the present invention. A movement management system according to the fifth example of the present invention has the same construction as the movement management system according to the second example of the present invention shown in FIG. 4 except the addition of a network (MNA1) which moves with the mobile node 4, and the use of an HTTP session instead of a TCP session as a session between the mobile node 4 and movement management server 1.

In FIG. 9, only the movement management server 1, mobile node 4, communication partner node 5, and network (MNA1) are shown, and the home network 100, visited network 200, and gateway 3 are omitted from illustration.

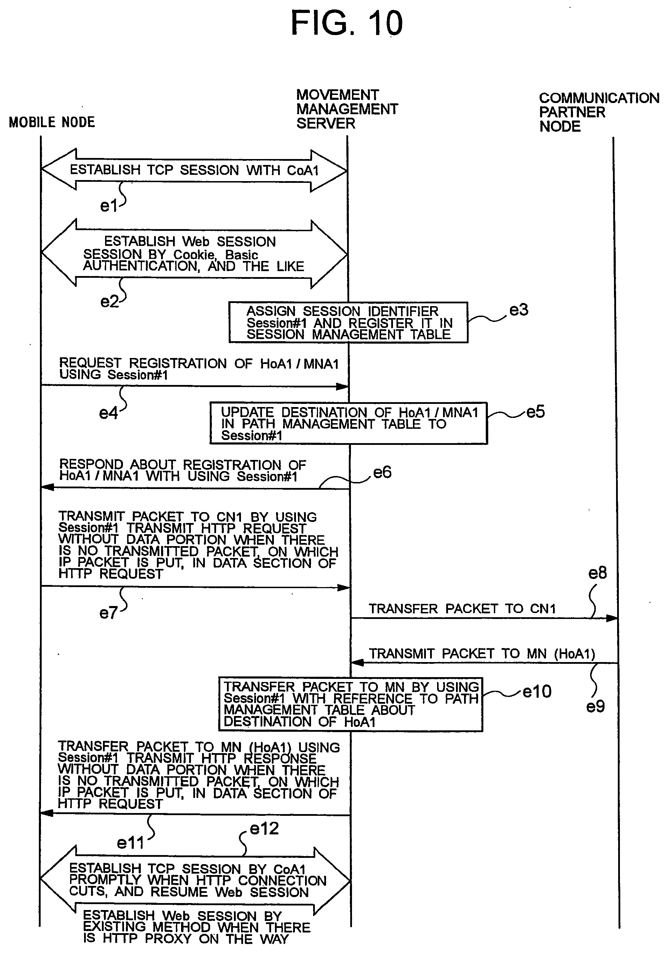

FIG. 10 is a sequence chart showing the operation of the movement management system according to the fifth example of the present invention. With reference to these FIGS. 9 and 10, the operation of the movement management system according to the fifth example of the present invention will be explained. In addition, in this example, an HTTP session is used instead of a TCP session as a session between the mobile node 4 and movement management server 1. In addition, the processing of the movement management server 1 in FIG. 10 is achieved because a CPU which constructs the management processing portion 13 and is not shown executes a program stored in the main memory (not shown) of the movement management server 1.

The operation of the movement management system according to the fifth example of the present invention is almost the same as the operation of the movement management system according to the second example of the present invention mentioned above. Nevertheless, also in the case of the fifth example of the present invention, not only the fixed ID, but also the network (MNA1) which moves with the mobile node 4 are registered at the time of a fixed ID registration request performed after HTTP session activation. As a result, association to "Session#1" from "MNA1" is also recorded in the path management table 11 of the movement management server 1 as well as association to "Session#1" from "HoA1."

First, operation at the time when the mobile node 4 moves will be explained. When connecting to a network (visited network 200 in FIG. 2) and acquiring a node ID (care-of ID "CoA1"), the mobile node 4 performs a TCP connection request to the movement management server 1.

The node ID of the TCP session in a side of the mobile node 4 at this time is "CoA1" and a TCP port number is "port#1", and a node ID in a side of the movement management server 1 is "HA1" and a TCP port number is "port#2."

The TCP connection request of the mobile node 4 is received by the session transmitting and receiving portion 14 of the movement management server 1, and the establishment processing of the TCP session is performed (el in FIG. 10). In this example, after the establishment processing of the TCP session between this mobile node 4 and movement management server 1 is performed, the establishment processing of an HTTP session is performed further (e2 in FIG. 10). Therefore, not the information on the TCP session (node ID and port number) but the identifier ("Session#1:http_session#1 ") of the HTTP session is registered into the session management table 12 of the movement management server 1 (e3 in FIG. 10).

When the HTTP session is established between the mobile node 4 and movement management server 1, the mobile node 4 performs a registration request of the fixed ID "HoA1" and network (MNA1) using the HTTP session ("Session#1") (e4 in FIG. 10).

The registration request of the mobile node 4 is received by the management processing portion 13 of the movement management server 1 through the session transmitting and receiving portion 14, and the management processing portion 13 stores the fixed ID of the mobile node 4, and the session identifier (Session#1) of the HTTP session in the path management table 11 (e5 in FIG. 10). Then, the management processing portion 13 transmits a registration response to the mobile node 4 using "Session#1" (e6 in FIG. 10).

Next, operation at the time of performing transmission to the communication partner node 5 from the mobile node 4 will be explained. The mobile node 4 transmits a packet addressed to the communication partner node 5 (transmission destination ID "CN1", and sender ID "HoA1") to the movement management server 1 using "Session#1" (e7 in FIG. 10). At this time, as to the transmission of a packet from the mobile node 4 to the movement management server 1, the packet is transmitted as a data portion of an HTTP request. Since a packet addressed to the mobile node 4 from the movement management server 1 may exist even when there is no packet to be transmitted, an HTTP request without a data portion is transmitted from the mobile node 4 to the movement management server 1.

The packet addressed to the communication partner node 5 is received by the management processing portion 13 of the movement management server 1 through the session transmitting and receiving portion 14, and is transferred toward the communication partner node 5 using the network transmitting and receiving portion 15 (e8 in FIG. 10).

Furthermore, operation at the time of performing transmission to the mobile node 4 from the communication partner node 5 will be explained. The packet (transmission destination ID "HoA1", and sender ID "CN1") sent to the mobile node 4 from the communication partner node 5 is received by the management processing portion 13 of the movement management server 1 through the network transmitting and receiving portion 15 (e9 in FIG. 10).

On the basis of the transmission destination ID "HoA1" of the packet which is received, the management processing portion 13 retrieves a session identifier in the path management table 11. At this time, if not being able to find a session corresponding to the transmission destination ID of the packet, the management processing portion 13 revokes the packet.

If being able to find the session corresponding to the transmission destination ID of the packet, the management processing portion 13 transfers the packet to the mobile node 4 through the session "Session#1" corresponding to the transmission destination ID "HoA1" of the packet through the session transmitting and receiving portion 14 (e10 and e11 in FIG. 10).

In this case, as to the transmission of a packet to the mobile node 4 from the movement management server 1, the packet is transmitted as a data portion of an HTTP response. When there is no packet to be transferred, an HTTP response without a data portion is transmitted to the mobile node 4 from the movement management server 1.

Thus, in this example, since the movement management server 1 sends a packet, addressed to a fixed ID, to the mobile node 4 through a session between the movement management server 1 and mobile node 4, the mobile node 4 can continue communication using the same fixed ID even if it moves.

In addition, in this example, even if a device (gateway 3) which imposes restrictions on communication exists in a network between the movement management server 1 and mobile node 4, the mobile node 4 can continue communication through the movement management server 1 so long as it is possible to establish a session.

Moreover, in each example of the present invention mentioned above, a communication protocol which an application on a communication terminal uses may differ from a communication protocol used in a session established between the communication terminal and a movement management server.

By being made to have the above-described construction and operation, the present invention demonstrates an effect that communication can be continued even when a node moves to a network where a device which imposes restrictions on the communication exists.

## Claims

1. A movement management system which manages a communication terminal by a movement management server in a communication network where node identification information of the communication terminal is determined depending on a connection place to the network, wherein the movement management server has means of establishing a virtual communication path through which the communication terminal and the movement management server can mutually transmit and receive data from a network in a movement destination of the communication terminal.

2. The movement management system according to claim 1, wherein the movement management server includes means of associating and holding information on the virtual communication path with fixed identification information of the communication terminal.

3. The movement management system according to claim 2, wherein the movement management server includes means of mediating communication between the communication terminal and its communication partner on the basis of association of the fixed identification information with the information on the virtual communication path.

4. The movement management system according to claim 2, wherein the movement management server holds association with an identifier of a network, which moves with the communication terminal, and information on the virtual communication path.

5. The movement management system according to claim 4, wherein the movement management server mediates communication between the communication terminal, connected to a network which moves with the communication terminal, and its communication partner on the basis of association of an identifier of a network, which moves with the communication terminal, with information on the virtual communication path.

6. The movement management system according to claim 1, wherein the virtual communication path uses any of a TCP (Transmission Control Protocol) session, an HTTP (Hyper Text Transfer Protocol) session, and an SSL (Secure Sockets Laver) session.

7. A movement management server which manages a communication terminal in a communication network where node identification information of the communication terminal is determined depending on a connection place to the network, comprising:
means of establishing a virtual communication path through which the communication terminal and the movement management server can mutually transmit and receive data from a network in a movement destination of the communication terminal.

8. The movement management server according to claim 7, including means of associating and holding information on the virtual communication path with fixed identification information of the communication terminal.

9. The movement management server according to claim 8, including means of mediating communication between the communication terminal and its communication partner on the basis of association of the fixed identification information with the information on the virtual communication path.

10. The movement management server according to claim 8, holding association of an identifier of a network, which move with the communication terminal, with information on the virtual communication path.

11. The movement management server according to claim 10, mediating communication between the communication terminal, connected to a network which moves with the communication terminal, and its communication partner on the basis of association of an identifier of a network, which moves with the communication terminal, with information on the virtual communication path.

12. The movement management server according to claim 7, wherein the virtual communication path uses any of a TCP (Transmission Control Protocol) session, an HTTP (Hyper Text Transfer Protocol) session, and an SSL (Secure Sockets Laver) session.

13. A movement management method used in a movement management system which manages a communication terminal by a movement management server in a communication network where node identification information of the communication terminal is determined depending on a connection place to the network, wherein the movement management server executes processing of establishing a virtual communication path through which the communication terminal and the movement management server can mutually transmit and receive data from a network in a movement destination of the communication terminal.

14. The movement management method according to claim 13, wherein the movement management server executes processing of associating and holding information on the virtual communication path with fixed identification information of the communication terminal.

15. The movement management method according to claim 14, wherein the movement management server executes processing of mediating communication between the communication terminal and its communication partner on the basis of association of the fixed identification information with the information on the virtual communication path.

16. The movement management method according to claim 14, wherein the movement management server executes processing of holding association of an identifier of a network, which move with the communication terminal, with information on the virtual communication path.

17. The movement management method according to claim 16, wherein the movement management server executes processing of mediating communication between the communication terminal, connected to a network which moves with the communication terminal, and its communication partner on the basis of association of an identifier of a network, which move with the communication terminal, with information on the virtual communication path.

18. The movement management method according to claim 13, wherein the virtual communication path uses any of a TCP (Transmission Control Protocol) session, an HTTP (Hyper Text Transfer Protocol) session, and an SSL (Secure Sockets Laver) session.

19. A program of a movement management method used in a movement management system which manages a communication terminal by a movement management server in a communication network where node identification information of the communication terminal is determined depending on a connection place to the network, wherein the program is used for making a computer of the movement management server execute processing of establishing a virtual communication path through which the communication terminal and the movement management server can mutually transmit and receive data from a network in a movement destination of the communication terminal.
